# NEUE EUROPÄISCHE PATENTSCHRIFT

(11) **EP 3 562 719 B2**
(45) Veröffentlichungstag und Bekanntmachung des Hinweises auf die Entscheidung über den Einspruch: **22.07.2026**
(45) Hinweis auf die Patenterteilung: 24.11.2021
(21) Anmeldenummer: 17832928.0
(22) Anmeldetag: 12.12.2017
(51) Int. Cl.: B60T 13/66

(54) **KRAFTFAHRZEUG-STEUERGERÄT FÜR EINE ELEKTRISCHE PARKBREMSE**
CONTROLLER FOR PARKING BRAKE OF A VEHICLE
CONTRÔLEUR POUR FREIN DE STATIONNEMENT DE VEHICULE

(30) Priorität: 27.12.2016 DE 102016015544
(43) Veröffentlichungstag der Anmeldung: 06.11.2019
(73) Patentinhaber: ZF Active Safety GmbH, 56070 Koblenz (DE)
(72) Erfinder: ALFTER, Ingo, 53489 Sinzig (DE); GRIESER-SCHMITZ, Stefan, 56070 Koblenz (DE)
(74) Vertreter: Prinz & Partner mbB
(86) Internationale Anmeldenummer: PCT/EP2017/082403
(87) Internationale Veröffentlichungsnummer: WO 2018/121979

(56) Entgegenhaltungen:
- WO-A1-02/34562
- WO-A1-2006/061238
- JP-A- 2008 296 849
- US-A1- 2015 251 639

## Beschreibung

### Technisches Gebiet

Die vorliegende Offenbarung betrifft allgemein das Gebiet der Steuergeräte für Kraftfahrzeuge. Konkret wird die Ansteuerung einer elektrischen Parkbremse mittels eines Steuergeräts beschrieben.

### Hintergrund

Elektrische Parkbremsen (EPB) haben Einzug in eine Vielzahl moderner Kraftfahrzeuge gefunden und umfassen herkömmlicherweise zwei elektrische Aktuatoren an verschiedenen Fahrzeugrädern sowie ein den Aktuatoren zugeordnetes EPB-Steuergerät.

Bei einem hydraulischen Kraftfahrzeug-Bremssystem sind die EPB-Aktuatoren an den Radbremsen zweier gegenüberliegender Fahrzeugräder verbaut und ermöglichen eine elektrische Betätigung eines jeweiligen Radbremszylinders im Parkbremsbetrieb (Einzelheiten hierzu finden sich beispielsweise in der DE 197 32 168 A). Im Normalbremsbetrieb werden die Radbremszylinder hingegen hydraulisch betätigt. Hierzu stehen die Radbremszylinder in fluider Verbindung mit einem Hauptzylinder.

Bei einem herkömmlichen hydraulischen Bremssystem ist der Hauptzylinder mechanisch mit einem Bremspedal gekoppelt. Bei einem so-genannten Brake-By-Wire (BBW) System ist das Bremspedal hingegen - jedenfalls im Normalbremsbetrieb - mechanisch vom Hauptzylinder entkoppelt. Die Bremspedalbetätigung wird hier sensorisch erfasst und zur Ansteuerung eines auf den Hauptzylinder einwirkenden elektrischen Aktuators elektronisch aufbereitet. Ferner sind elektrische Bremskraftverstärker bekannt (auch Electric Brake Boost, EBB, genannt), bei denen eine mittels des Bremspedals auf den Hauptzylinder eingeleitete Kraft durch eine ebenfalls auf den Hauptzylinder einwirkenden elektrischen Aktuator verstärkt wird.

Aufgrund des Kostendrucks in der Fahrzeugindustrie ist es wünschenswert, die Systemkosten durch Einsparungen zu verringern. Gleichzeitig darf die Systemsicherheit nicht unter den entsprechenden Einsparungen leiden. Diese Vorgaben gelten insbesondere auch für das im Fahrzeug verbaute Bremssystem.

In diesem Zusammenhang wird beispielsweise in der WO 2006/061238 A1 die Ansteuerung von EPB-Aktuatoren mittels des einem Automatikgetriebe zugeordneten Steuergeräts vorgeschlagen. Auf diese Weise kann eine herkömmliche Getriebeverriegelung in Form einer Parksperre eingespart werden. Das Getriebe-Steuergerät ist zusätzlich zum regulären EPB-Steuergerät vorgesehen. In der WO 2006/061238 A1 finden sich ferner unterschiedliche Ansätze für eine redundante Auslegung der EPBrelevanten Kommunikationsverbindungen, um die Systemsicherheit zu erhöhen.

Das Dokument JP 2008 296849 A offenbart eine Vorrichtung zur Fehlererkennung für eine in einem Fahrzeug befindliche elektronische Steuereinheit.

Das Dokument US 2015/0251639 A1 offenbart ein Verfahren für den Betrieb eines Kraftfahrzeugbremssystems, das wenigstens eine elektrische Parkbremse umfasst. Die elektrische Parkbremse umfasst dabei wenigstens einen Aktuator, der angesteuert werden kann, um die Parkbremse zu aktivieren.

Das Dokument WO 02/34562 A1 offenbart ein Reservebremssystem und ein Verfahren zur Geschwindigkeitsreduzierung eines Kraftfahrzeugs. Das Kraftfahrzeug ist dabei mit einem elektrisch gesteuerten Bremssystem und einem Fahrsystem, das einen Motor mit einer Drosselsteuerung zur Steuerung der Motordrehzahl umfasst, ausgestattet.

### Kurzer Abriss

Der vorliegenden Erfindung liegt die Aufgabe zugrunde, eine in Bezug auf Redundanz und Kosten verbesserte EPB-Lösung anzugeben.

Die Aufgabe wird durch Anspruch 1 gelöst. Gemäß einem ersten Aspekt wird ein Kraftfahrzeug-Steuergerät angegeben. Das Steuergerät umfasst ein erstes Prozessorsystem, welches ausgebildet ist, wenigstens einen EPB-Aktuator und wenigstens eine weitere Kraftfahrzeug-Funktionseinheit anzusteuern. Ferner umfasst das Steuergerät ein zweites Prozessorsystem, welches ausgebildet ist, in zumindest teilweise redundanter Weise zum ersten Prozessorsystem den wenigstens einen EPB-Aktuator anzusteuern. Des Weiteren umfasst das Steuergerät eine Umschalteinrichtung, welche ausgebildet ist, eine Betätigung des wenigstens einen EPB-Aktuators wahlweise über das erste Prozessorsystem oder das zweite Prozessorsystem zu ermöglichen.

Jedes Prozessorsystem kann wenigstens einen Prozessor oder wenigstens einen Prozessorkern umfassen. Ferner kann jedes Prozessorsystem eine Speichereinrichtung umfassen, auf welcher Programmcode zur Ausführung durch den entsprechenden Prozessor gespeichert ist. In manchen Varianten kann für beide Prozessoreinrichtungen eine gemeinsame Speichereinrichtung vorgesehen sein. Die beiden Prozessorsysteme können verschiedene Prozessorkerne eines einzigen Multicore-Prozessors umfassen oder von zwei separaten integrierten Schaltungen (z. B. zwei ASICs) umfasst sein.

Das Steuergerät kann eine eigenständig handhabbare Baugruppe bilden. Insbesondere kann für das Steuergerät ein eigenes Gehäuse vorgesehen sein. Das erste Prozessorsystem und das zweite Prozessorsystem können auf einer gemeinsamen Leiterplatte vorgesehen werden.

Die EPB-Aktuatoren können auf einem elektromechanischen Prinzip basieren. In andere Varianten können die elektrischen Parkbremsaktuatoren elektrohydraulisch oder elektropneumatisch betrieben werden.

Das erste Prozessorsystem kann ausgebildet sein, zwei EPB-Aktuatoren, die unterschiedlichen Fahrzeugrädern zugeordnet sind, anzusteuern. Gleiches gilt für das zweite Prozessorsystem.

Das erste Prozessorsystem und das zweite Prozessorsystem können die einen oder die mehreren EPB-Aktuatoren in teilweise redundanter Weise ansteuern. Dies kann beispielsweise bedeuten, dass jedenfalls einige EPB-Ansteueroptionen (z. B. ein Schließen der EPB-Aktuatoren) sowohl dem ersten Prozessorsystem als auch dem zweiten Prozessorsystem zur Verfügung stehen, um bei einem Ausfall von einem der beiden Prozessorsysteme noch eine (jedenfalls teilweise) Ansteuerung des einen oder der mehreren EPB-Aktuatoren zu ermöglichen.

Wie oben erläutert, ist das erste Prozessorsystem ausgebildet, zusätzlich zu dem wenigstens einen EPB-Aktuator wenigstens eine weitere Kraftfahrzeug-Funktionseinheit anzusteuern. Diese weitere Funktionseinheit ist dazu ausgebildet, das Kraftfahrzeug in redundanter Weise zu EPB abzubremsen oder im Stillstand zu halten. Die weitere Kraftfahrzeug-Funktionseinheit ist ausgebildet, eine oder mehrere der folgenden Funktionen zu implementieren: eine Antiblockier-Regelung (ABS); eine Fahrdynamikregelung (ESC).

Das Steuergerät kann ferner wenigstens eine Überwachungseinrichtung umfassen, welche ausgebildet ist, die Funktionsfähigkeit des ersten Prozessorsystems zu überwachen. In manchen Varianten können auch zwei oder mehr solche Überwachungsvorrichtungen vorgesehen sein. Die wenigstens eine Überwachungseinrichtung, oder jede der Überwachungseinrichtungen, kann ausgebildet sein, in Abhängigkeit der Funktionsfähigkeit des ersten Prozessorsystems die Umschalteinrichtung anzusteuern.

Gemäß einer ersten Variante kann die Überwachungseinrichtung eine mit dem ersten Prozessorsystem gekoppelte und separat vom zweiten Prozessorsystem vorgesehene Funktionseinheit sein. Gemäß einer zweiten Variante kann die Überwachungseinrichtung in das zweite Prozessorsystem integriert sein, wobei das zweite Prozessorsystem eine Schnittstelle aufweist, um die Überwachungseinrichtung mit dem ersten Prozessorsystem zu koppeln (z. B. damit die Überwachungseinrichtung über die Schnittstelle die Funktionsfähigkeit des ersten Prozessorsystems überwachen kann). Allgemein kann das zweite Prozessorsystem gemäß der zweiten Variante ausgebildet sein, eine mangelnde Funktionsfähigkeit des ersten Prozessorsystems anhand eines Ausbleibens von Kommunikation über die Schnittstelle von dem ersten Prozessorsystem zu erkennen. Beide Varianten sind kombinierbar, indem zwei separate Überwachungseinrichtungen vorgesehen sind, wobei die erste Überwachungseinrichtung eine separat vom zweiten Prozessorsystem vorgesehene Funktionseinheit ist und die zweite Überwachungseinheit in das zweite Prozessorsystem integriert ist.

Das zweite Prozessorsystem ist ausgebildet, den wenigstens einen EPB-Aktuator (oder alle EPB-Aktuatoren) unmittelbar zu schließen, wenn eine mangelnde Funktionsfähigkeit des ersten Prozessorsystems erkannt wird. Eine solche Ausbildung des zweiten Prozessorsystems erfolgt in einem autonomen oder teilautonomen Fahrbetrieb, wenn davon auszugehen ist, dass die "Rückfallebene" eines Fahrereingriffs zum Abbremsen des Fahrzeugs nicht gegeben ist.

In manchen Varianten kann das Steuergerät ferner eine EPB-Treiberschaltung umfassen. Die EPB-Treiberschaltung kann ausgebildet sein, eine Ansteuerspannung für wenigstens eine dem wenigstens einen EPB-Aktuator zugeordnete H-Brücke zu erzeugen. Die entsprechende H-Brücke kann ebenfalls im Steuergerät enthalten sein. Sofern das Steuergerät (z. B. im Umfang jedes der beiden Prozessorsysteme) dazu ausgelegt ist, zwei EPB-Aktuatoren anzusteuern, kann das Steuergerät demgemäß zwei H-Brücken umfassen.

Die EPB-Treibereinheit, das zweite Prozessorsystem und die Überwachungseinheit können in einer integrierten Schaltung zusammengefasst sein. Diese integrierte Schaltung kann als anwendungsspezifische integrierte Schaltung (also als ASIC) ausgebildet sein. Das erste Prozessorsystem wiederum kann in einer weiteren integrierten Schaltung (z. B. einem weiteren ASIC) zusammengefasst sein. Beide integrierte Schaltungen können auf einer einzigen Leiterplatte angeordnet sein.

Die Umschalteinrichtung kann ausgebildet sein, die Betätigung des wenigstens einen EPB-Aktuators wahlweise über das erste Prozessorsystem oder das zweite Prozessorsystem zu ermöglichen, indem wahlweise dem ersten Prozessorsystem oder dem zweiten Prozessorsystem ein Zugriff auf die EPB-Treiberschaltung gestattet wird. Insbesondere kann auf diese Weise bei unzureichender Funktionsfähigkeit des ersten Prozessorsystems ein Zugriff des ersten Prozessorsystems auf die EPB-Treiberschaltung aus Sicherheitsgründen verwehrt werden. In diesem Fall kann das zweite Prozessorsystem aktiviert werden, um in redundanter Weise zum ersten Prozessorsystem die Ansteuerung des wenigstens einen EPB-Aktuators zu übernehmen.

Das Steuergerät kann wenigstens ein Bussystem aufweisen, welches ausgebildet ist, das erste Prozessorsystem und das zweite Prozessorsystem mit der EPB-Treiberschaltung zu koppeln. In einem solchen Fall kann die Umschalteinrichtung als Bus-Multiplexer ausgebildet sein. Konkret kann die als Bus-Multiplexer ausgebildete Umschalteinrichtung funktional zwischen dem ersten Prozessorsystem und dem zweiten Prozessorsystem einerseits und der EPB-Treiberschaltung auf der anderen Seite vorgesehen sein.

Das zweite Prozessorsystem hat eine Schnittstelle zum Empfang eines auf eine Fahrzeuggeschwindigkeit (z. B. eine Raddrehzahl) hinweisenden Signals. In diesem Fall ist das Steuergerät ausgebildet, eine Betätigbarkeit des wenigstens einen EPB-Aktuators durch die zweite Prozessoreinheit freizugeben, wenn anhand des auf die Fahrzeuggeschwindigkeit hinweisenden Signals darauf zu schließen ist, dass die Fahrzeuggeschwindigkeit eine vordefinierte Bedingung erfüllt. Die vordefinierte Bedingung kann eine Schwellenwertbedingung sein. Insbesondere kann die vordefinierte Bedingung derart formuliert sein, dass ein bestimmter Geschwindigkeitsschwellwert nicht überschritten ist. Der Geschwindigkeitsschwellwert kann unter 10 km/h, insbesondere unter 7 km/h und vor allem unter 5 km/h liegen.

Das Steuergerät kann ausgebildet sein, einen autonomen oder teilautonomen Fahrbetrieb zu erkennen und eine Betätigbarkeit des wenigstens einen EPB-Aktuators durch die zweite Prozessoreinheit bei erkanntem autonomen oder teilautonomen Fahrbetrieb freizugeben. Der autonome oder teilautonome Fahrbetrieb kann insbesondere ein autonomes oder teilautonomes Parken oder Rangieren des Fahrzeugs (insbesondere ohne Anwesenheit eines Fahrers im Fahrzeug) umfassen.

In diesem Zusammenhang kann das erste Prozessorsystem dazu ausgebildet sein, dem zweiten Prozessorsystem den autonomen oder teilautonomen Fahrbetrieb mittels Inter-Prozessor-Kommunikation zu signalisieren. Konkret kann eine entsprechende Schnittstelle zur Inter-Prozessor-Kommunikation zwischen dem ersten Prozessorsystem und dem zweiten Prozessorsystem vorgesehen sein. Ferner kann das Steuergerät ausgebildet sein, eine Betätigbarkeit des wenigstens einen EPB-Aktuators durch das zweite Prozessorsystem nur dann freizugeben, wenn dem zweiten Prozessorsystem vom ersten Prozessorsystem der autonome oder teilautonome Fahrbetrieb signalisiert wurde. Bei freigegebener Betätigbarkeit des wenigstens einen EPB-Aktuators mittels des zweiten Prozessorsystems kann eine Betätigung des wenigstens einen EPB-Aktuators unmittelbar dann erfolgen, wenn eine mangelnde Funktionsfähigkeit des ersten Prozessorsystems erkannt wird (z. B. von der oben erläuterten Überwachungseinrichtung). Das zweite Prozessorsystem kann insbesondere ausgebildet sein, im autonomen oder teilautonomen Fahrbetrieb den wenigstens einen EPB-Aktuator bei Erkennen einer mangelnden Funktionsfähigkeit des ersten Prozessorsystems unmittelbar zu schließen.

Gemäß einem weiteren Aspekt wird ein Verfahren zur Betätigung wenigstens eines EPB-Aktuators angegeben. Das Verfahren umfasst ein wahlweises Betätigen des wenigstens einen EPB-Aktuators über ein erstes Prozessorsystem oder ein zweites Prozessorsystem, wobei das erste Prozessorsystem ausgebildet ist, den wenigstens einen EPB-Aktuator und wenigstens eine weitere Kraftfahrzeug-Funktionseinheit anzusteuern. Das zweite Prozessorsystem ist ausgebildet, in zumindest teilweise redundanter Weise zum ersten Prozessorsystem den wenigstens einen EPB-Aktuator anzusteuern.

Das Verfahren kann einen oder mehrere weitere Schritte, wie oben und nachfolgend beschrieben, umfassen.

Ferner wird ein Computerprogrammprodukt angegeben, das Programmcode zum Durchführen des hier vorgestellten Verfahrens umfasst, wenn der Programmcode auf einem Kraftfahrzeug-Steuergerät ausgeführt wird. Ebenfalls angegeben wird ein Kraftfahrzeug-Steuergerät, das eine oder mehrere Speichereinrichtungen umfasst, auf welchem das entsprechende Computerprogrammprodukt gespeichert ist.

### Kurze Beschreibung der Zeichnungen

Weitere Aspekte, Einzelheiten und Vorteile der vorliegenden Erfindung ergeben sich aus der nachfolgenden Beschreibung von Ausführungsbeispielen unter Bezugnahme auf die Figuren. Es zeigen:
- Fig. 1: ein Ausführungsbeispiel eines Fahrzeug-Systems;
- Fig. 2: ein Ausführungsbeispiel eines Steuergeräts für das Fahrzeug-System nach Fig. 1; und
- Fign. 3 & 4: Ablaufdiagramme von Verfahren gemäß Ausführungsbeispielen der vorliegenden Erfindung.

### Detaillierte Beschreibung

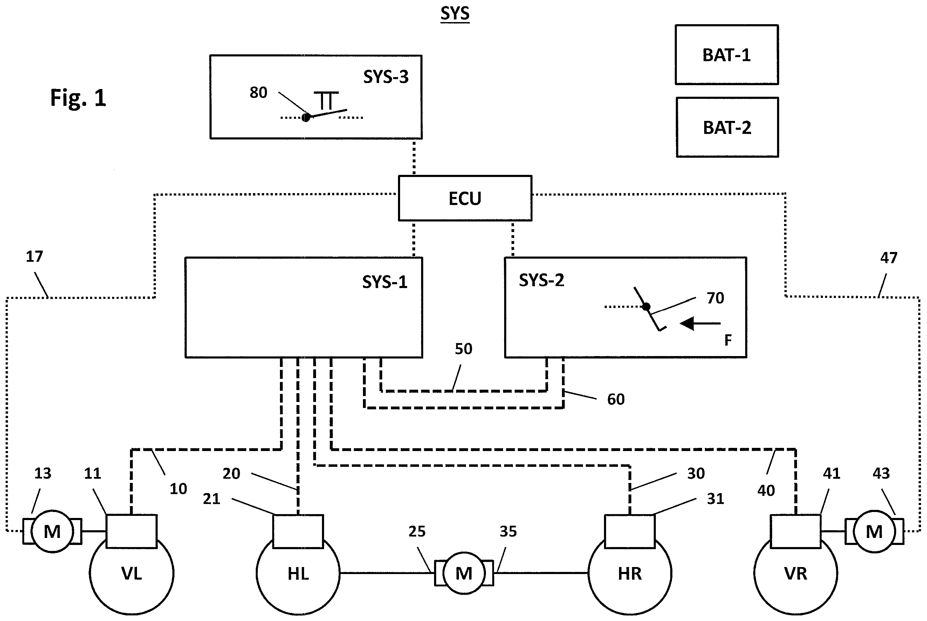

In Fig. 1 ist ein elektronisch gesteuertes Fahrzeug-System SYS schematisch dargestellt sind. Das System SYS gemäß Fig. 1 umfasst ein erstes Teilsystem SYS-1, ein zweites Teilsystem SYS-2, ein drittes Teilsystem SYS-3 und ein zentrales elektronisches Steuergerät (Electronic Control Unit, ECU). Für eine redundante elektrische Energieversorgung des Systems SYS werden ein erster Akkumulator BAT-1 und ein zweiter Akkumulator BAT-2 verwendet.

Das dritte Teilsystem SYS-3 ist ausgebildet, eine EPB-Funktion zu implementieren. Jedes der beiden weiteren Teilsystem SYS-1 und SYS-2 ist ausgebildet, das Kraftfahrzeug autonom abzubremsen oder im Stillstand zu halten (insbesondere in redundanter Weise zur EPB-Funktion). Das zentrale Steuergerät ECU ermöglicht in dem in Fig. 1 dargestellten Ausführungsbeispiel eine Ansteuerung aller drei Teilsysteme SYS-1, SYS-2 und SYS-3. Das Steuergerät ECU kann daher als weitere Komponente eines jeden der drei Teilsysteme SYS-1, SYS-2 und SYS-3 aufgefasst werden. In anderen Realisierungen könnte das zentrale Steuergerät ECU auch zur Ansteuerung lediglich eines der beiden Teilsysteme SYS-1 und SYS-2 sowie zur Ansteuerung von dem dritten Teilsystem SYS-3 zugeordneten EPB-Aktuatoren 13, 43 ausgebildet sein.

An das erste Teilsystem SYS-1, genauer gesagt an eine in Fig. 1 nicht dargestellte hydraulische Steuereinheit (Hydraulic Control Unit, HCU) desselben, sind über Hydraulikleitungen 10, 20, 30 und 40 hydraulisch betätigbare Radbremsen 11, 21, 31 und 41 des Fahrzeugs angeschlossen. Bei dem ersten Teilsystem SYS-1 handelt es sich im Ausführungsbeispiel um ein System, das ein fahrerunabhängiges, individuelles Erzeugen und Regeln der Bremsdrücke in den Radbremsen 11, 21, 31 und 41 ermöglicht. Das erste Teilsystem SYS-1 kann beispielsweise ein in Fahrzeugen heute serienmäßiges Antiblockier- und/oder Fahrdynamikregelsystem (ABS bzw. Electronic Stability Control, ESC) implementieren.

Das zweite Teilsystem SYS-2 ist über Hydraulikleitungen 50, 60 mit dem ersten Teilsystem SYS-1 verbunden. Das zweite Teilsystem SYS-2 ist ausgelegt, Bremsdrücke für das erste Teilsystem SYS-1 und/oder die Radbremsen 11, 21, 31 und 41 zu erzeugen. Zum Verständnis der Möglichkeiten, die sich aus der vorstehenden und den nachfolgenden "und/oder"-Verknüpfungen zwischen den Begriffen "das erste Teilsystem SYS-1" und "die Radbremsen 11, 21, 31 und 41" ergeben, seien beispielhaft folgende Varianten erläutert:
- Das zweite Teilsystem SYS-2 erzeugt die Bremsdrücke über die Hydraulikleitungen 50, 60 unmittelbar für die Radbremsen 11, 21, 31 und 41, wenn das erste Teilsystem SYS-1 passiv ist, also keine (z. B. überlagernde) radindividuelle Regeleingriffe, wie etwa eine ABS- oder ESC-Regelung, ausgeführt werden.
- Ist jedoch das erste Teilsystem SYS-1 aktiv, um z. B. eine ABS- oder ESC-Regelung auszuführen, so kann in machen Varianten das zweite Teilsystem SYS-2 über die Hydraulikleitungen 50, 60 dem ersten Teilsystem SYS-1 eingangsseitig Bremsdrücke bereit stellen, so dass das erste Teilsystem SYS-1 ausgangsseitig Bremsdrücke für die Radbremsen 11, 21, 31 und 41 radindividuell regeln kann (z. B. durch Halten, Erhöhen oder Erniedrigen des Bremsdrucks). Eine solche Regelung kann auch dann stattfinden, wenn das zweite Teilsystem SYS-2 keine Bremsdrücke bereit stellt. Zu diesem Zweck umfasst das erste Teilsystem SYS-1 einen separaten Bremsdruckgeber (z. B. eine elektrisch betriebene Hydraulikpumpe).
- Da nicht immer an allen Radbremsen 11, 21, 31, 41 gleichzeitig individuelle Regeleingriffe erforderlich sind, z.B. wenn im Rahmen einer ESC-Regelung nur ein kurvenäußeres Vorderrad abzubremsen ist, um ein Untersteuern des Fahrzeugs zu verhindern, sind im praktischen Betrieb Kombinationen der beiden oben genannten Möglichkeiten üblich.

Bei dem zweiten Teilsystem SYS-2 handelt es sich allgemein um einen als Bremsdruckgebersystem ausgelegtes Bremskrafterzeuger, wie etwa eine EBB- oder BBW-Baugruppe, der bei hydraulischer Systemauslegung auf einen Hauptzylinder einwirkt. Das zweite Teilsystem SYS-2 ist als Bremskrafterzeuger dazu ausgebildet, eine oder mehrere der folgenden Funktionen zu erfüllen:
- einen vom Fahrer über ein Bremspedal 70 angeforderten Bremswunsch zu erfassen, der auf eine Verzögerung des Kraftfahrzeugs gerichtet ist;
- eine vom Fahrer über das Bremspedal 70 eingeleitete Betätigungskraft F mittels eines Aktuators nach elektrischem, elektromechanischem, elektrohydraulischem oder elektropneumatischem Prinzip zu verstärken;
- die Bremsdrücke für das erste Teilsystem SYS-1 und/oder die Radbremsen 11, 21, 31 und 41 mittels eines elektrischen Aktuators nach elektrischem, elektromechanischem, elektrohydraulischem oder elektropneumatischem Prinzip zu verstärken oder zu erzeugen.

So kann das zweite Teilsystem SYS-2 unter anderem in einer oder mehreren der folgenden Betriebsarten betrieben werden:
- Für die Funktion einer hydraulischen Betriebsbremse, also bei Normalbremsungen, wird die vom Fahrer über das Bremspedal 70 aufgebrachte Betätigungskraft F insbesondere mittels eines elektrischen Aktuators verstärkt, wobei in einem Hauptzylinder die Bremsdrücke für das erste Teilsystem SYS-1 und/oder die Radbremsen 11, 21, 31 und 41 in Abhängigkeit der verstärkten Betätigungskraft, vorzugsweise gemäß einer vorherbestimmten Verstärkerkennlinie, erzeugt werden.
- Ist das Bremssystem und insbesondere das zweite Teilsystem SYS-2 als BBW-System ausgelegt, so wird für die Funktion der Betriebsbremse und damit für Normalbremsungen der vom Fahrer über das Bremspedal 70 eingeleitete Verzögerungswunsch erfasst, um in dessen Abhängigkeit Bremsdrücke für das erste Teilsystem SYS-1 und/oder die Radbremsen 11, 21, 31 und 41 zu erzeugen. Dabei wird der Verzögerungswunsch mittels einer geeigneten Sensorik, die die am Bremspedal 70 eingeleitete Kraft- und/oder Wegcharakteristik erfasst, ermittelt. Der Verzögerungswunsch wird dann vom Steuergerät ECU in ein Ansteuersignal für einen elektrischen Aktuator umgesetzt, die auf den Hauptzylinder einwirkt. Das Bremspedal 70 bleibt hingegen vom Hauptzylinder entkoppelt. Ein Simulator kann dem Fahrer trotz der Entkopplung ein konventionelles Pedalgefühl vermitteln.
- Für den Fall einer Notbremsung, beispielsweise einer Bremsung, die trotz eines fehlerhaften Akkumulators (z. B. BAT-1 und/oder BAT-2) gewährleistet sein muss, werden die Bremsdrücke für das erste Teilsystem SYS-1 und/oder die Radbremsen 11, 21, 31 und 41 entweder entsprechend einer gegenüber Normalbremsungen reduzierten Verstärkerkennlinie oder unmittelbar in Abhängigkeit der vom Fahrer über das Bremspedal 70 in den Hauptzylinder eingeleiteten Betätigungskraft F erzeugt. Dies geschieht bei einem BBW-System z. B. gemäß dem Push-Through-Prinzip, bei dem die Entkopplung von Bremspedal 70 und Hauptzylinder aufgehoben wird.
- Für den Fall einer automatischen Bremsung, also einer Bremsung, die unabhängig von einer vom Fahrer über das Bremspedal 70 eingeleiteten Betätigung erfolgt, werden die Bremsdrücke für das erste Teilsystem SYS-1 und/oder die Radbremsen 11, 21, 31 und 41 in Abhängigkeit der für die automatische Bremsung angeforderten Parameter, z. B. Fahrzeugverzögerung und Fahrzeuggeschwindigkeit, erzeugt. Automatische Bremsungen finden z. B. im Rahmen einer als ACC-Funktion (Adaptive Cruise Control) bekannten adaptiven Regelung der Fahrzeuggeschwindigkeit oder einer als ESC-Funktion bekannten Fahrdynamikregelung, sowie beim autonomen Fahren im AD-Betrieb (Autonomous Driving) oder RCP-Betrieb (Remote Controlled Parking) des Fahrzeugs statt.
- Für den Fall einer regenerativen Bremsung, also einer Bremsung, bei der die beim Bremsen abgebaute kinetische Energie eines Elektro- oder Hybridfahrzeugs in elektrische Energie umgewandelt und in einen Akkumulator (z .B. BAT-1 und/oder BAT-2) oder dergleichen zurückgespeist wird, wird zunächst, sofern es sich nicht um eine automatische Bremsung handelt, der vom Fahrer über das Bremspedal 70 eingeleitete Verzögerungswunsch ermittelt. In dessen Abhängigkeit wird ein elektrischer Antrieb 25, 35 des Fahrzeugs, der hier auf die beiden hinteren Räder HL und HR wirkt, als Generator betrieben. Handelt es sich demgegenüber um eine automatische Bremsung, so erfolgt der Generatorbetrieb des elektrischen Antriebs 25, 35 in Abhängigkeit der für die automatische Bremsung erforderlichen Verzögerung. Wenn das regenerative Bremsmoment nicht ausreichend ist, also der Verzögerungswunsch (keine automatische Bremsung) oder die erforderliche Verzögerung (automatische Bremsung) größer als die im Generatorbetrieb maximal erreichbare Verzögerung ist, wird zur Kompensation zusätzlich ein hydraulisches Bremsmoment aufgebracht, indem entsprechende Bremsdrücke für das erste Teilsystem SYS-1 und/oder die Radbremsen 11, 21, 31 und 41 erzeugt und eingestellt werden. Es sei angemerkt, dass der elektrische Antrieb des Fahrzeugs natürlich auch anstatt auf die beiden hinteren Räder HL, HR auch auf die beiden vorderen Räder VL, VR oder auf alle vier Räder VL, VR, HL, HR wirken kann. Sofern das erste Teilsystem SYS-1 dazu eingerichtet ist, Bremsdrücke nach einem elektrohydraulischen Prinzip selbst zu erzeugen, was beispielsweise bei einem ESC-System regelmäßig der Fall ist, kann das erste Teilsystem SYS-1 Bremsdrücke in einer oder mehreren der Radbremsen 11, 21, 31 und 41 unabhängig von dem zweiten Teilsystem SYS-2 erzeugen und einstellen. Von daher ist es in bestimmten Ausführungsvarianten möglich, dass automatische Bremsungen, insbesondere die ACC- und ESC-Funktion, vom ersten Teilsystem SYS-1 autark ausgeführt werden. Ein weiterer Aspekt in diesem Zusammenhang ist, dass in diesem Fall eine hydraulische Betätigung der Radbremsen 11, 21, 31 und 41 auch trotz eines fehlerhaften zweiten Teilsystems SYS-2 oder trotz fehlerhafter Hydraulikleitungen 50, 60 gewährleistet ist, wodurch sich die Betriebssicherheit des Bremssystems erhöht.

Wie oben bereits erläutert, implementiert das dritte Teilsystem SYS-3 die Funktion einer EPB, um das Fahrzeug sicher im Stillstand halten zu können. Das EPB-System SYS-3 umfasst einen ersten elektrischen, vorzugsweise elektromechanischen Aktuator 13 und einen zweiten elektrischen, vorzugsweise elektromechanischen Aktuator 43. Der Aktuator 13 wirkt im Ausführungsbeispiel auf die dem vorderen Rad VL zugeordnete Radbremse 11 und der Aktuator 43 auf die dem vorderen Rad VR zugeordnete Radbremse 41. Bei dem System gemäß Fig. 1 ist es von Vorteil, wenn wie hier die beiden Aktuatoren 13 und 43 des EPB-Systems auf die vorderen Räder VL und VR des Fahrzeugs wirken, da diese aufgrund der dynamischen Achslastverteilung einen erheblich größerer Bremskraftanteil als die hinteren Räder des Fahrzeugs übertragen können. Natürlich könnten aber die beiden Aktuatoren 13 und 43 auch auf die hinteren Räder HL und HR des Fahrzeugs wirken.

Für die EPB-Funktion ist im Ausführungsbeispiel kein eigenes Steuergerät vorgesehen, da gemäß Fig. 1 der Aktuator 13 über eine Steuerleitung 17 und der Aktuator 43 über eine Steuerleitung 47 von der dem zentralen Steuergerät ECU angesteuert werden können. Das dritte Teilsystem SYS-3 umfasst als Eingabe-Einrichtung ein Betätigungselement 80 (z. B. einen Schalter oder Taster), über das der Fahrer seinen Ansteuerbefehl eingibt. Der Ansteuerbefehl - typischerweise "Feststellbremse schließen" oder "Feststellbremse öffnen" - wird vom Steuergerät ECU erfasst und ausgewertet. Gemäß dem Ergebnis der Auswertung werden dann vom Steuergerät ECU die Aktuatoren 13, 43 betätigt.

Auch ist es dem Steuergerät ECU möglich, die EPB-Aktuatoren 13, 43 unabhängig von einer Betätigung des Betätigungselementes 80, also unabhängig vom Ansteuerwunsch des Fahrers zu betätigen. Dies erfolgt z. B. im Rahmen einer als HH-Funktion (Hill Holder) bekannten Berganfahrhilfe, die durch automatisches Schließen der EPB ein Wegrollen des Fahrzeugs auf einer geneigten Fahrbahn verhindert und durch automatisches Öffnen der EPB (z. B. in Abhängigkeit des Neigungswinkels und/oder dem vom Antriebsmotor des Fahrzeugs bereitgestellten Drehmoment) ein komfortables Anfahren des Fahrzeugs auf der geneigten Fahrbahn ermöglicht. Ferner können die EPB-Aktuatoren 13, 43 vom Steuergerät ECU angesteuert werden, um Bremsungen oder Notbremsungen selbstständig auszuführen, insbesondere als Rückfallebene beispielsweise im AD- oder RCP-Betrieb.

Bei diesen Anwendungen bieten die EPB-Aktuatoren 13, 43 bei Ausfällen des ersten Teilsystems SYS-1 und/oder des zweiten Teilsystems SYS-2 eine weitere Rückfallebene, um beispielsweise Notbremsungen durchzuführen oder das Fahrzeug im Stillstand halten zu können. Im Zusammenhang mit hochautomatisiertem Fahren, insbesondere beim RCP-Betrieb (während dessen sich der Fahrer möglicherweise sogar außerhalb des Fahrzeugs befindet), ist die Verfügbarkeit des zweiten Teilsystems SYS-2 ohnehin eingeschränkt, da aufgrund der fehlenden Einflussmöglichkeit des Fahrers keine Betätigung des Bremspedals 70 für Notbremsungen möglich ist. Dies kommt einem teilweisen (mechanischen) Ausfall des zweiten Teilsystems SYS-2 gleich. Allerdings ist dann aber davon auszugehen, dass das Steuergerät ECU funktionsfähig ist, um die EPB-Aktuatoren 13, 43 anzusteuern.

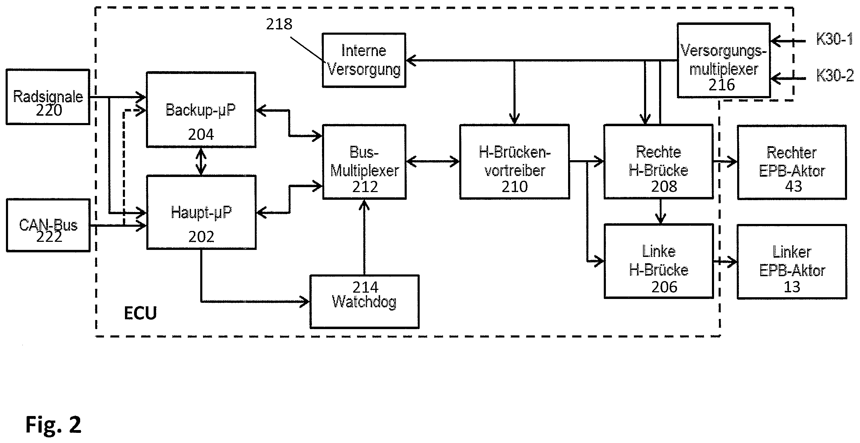

Fig. 2 zeigt in einer schematischen Ansicht ein Ausführungsbeispiel des Steuergeräts ECU aus Fig. 1. Es versteht sich, dass das in Fig. 2 dargestellte Steuergerät ECU in Fahrzeug-Systemen Verwendung finden kann, die von dem System aus Fig. 1 abweichen.

Wie in Fig. 2 dargestellt, umfasst das Steuergerät ECU ein erstes Prozessorsystem 202 mit wenigstens einem Hauptprozessor sowie ein zweites Prozessorsystem 104 mit wenigstens einem Backup-Prozessor. Das erste Prozessorsystem 202 und das zweite Prozessorsystem 204 können durch unterschiedliche Prozessorkerne eines Multicore-Prozessors realisiert werden. Alternativ hierzu können das erste Prozessorsystem 202 und das zweite Prozessorsystem 204 durch separate integrierte Schaltkreise (z. B. separate ASICs) realisiert sein. Die beiden Prozessorsysteme 202, 204 können auf separaten Leiterplatten oder auf derselben Leiterplatte innerhalb eines Gehäuses des Steuergeräts ECU vorgesehen sein.

Jedes der beiden Prozessorsysteme 202, 204 ist ausgebildet, die beiden EPB-Aktuatoren 13, 43 anzusteuern. Dabei ist im vorliegenden Ausführungsbeispiel das zweite Prozessorsystem 204 ausschließlich für eine Ansteuerung der beiden EPB-Aktuatoren 13, 43 ausgebildet, während das erste Prozessorsystem 202 darüber hinaus die Ansteuerung wenigstens einer weiteren Kraftfahrzeug-Funktionseinheit ermöglicht. Diese weitere Funktionseinheit ist ausgebildet, das Kraftfahrzeug in redundanter Weise zu den EPB-Aktuatoren 13, 43 abzubremsen oder im Stillstand zu halten. In dieser Hinsicht sei beispielhaft auf die beiden Teilsysteme SYS-1 und/oder SYS-2 aus Fig. 2 Bezug genommen. Konkret kann das erste Prozessorsystem 202 ausgebildet sein, einen elektrischen Aktuator, wie beispielsweise einen Elektromotor mit nachgeschaltetem Lineargetriebe oder einen Elektromotor mit nachgeschaltetem Pumpenkolben, wenigstens eines der beiden Teilsysteme SYS-1 und/oder SYS-2 zu betätigen. Des Weiteren ist das erste Prozessorsystem 202 in der Lage, die EPB-Aktuatoren 13, 43 im Rahmen der regulären EPB-Funktion des Teilsystems SYS-3 sowie unabhängig von diesem Teilsystem SYS-3 (also insbesondere unabhängig von einer Betätigung des Betätigungselements 80) anzusteuern.

Im Steuergerät ECU ist für jeden der beiden EPB-Aktuatoren 13, 43 eine separate H-Brücke 206, 208 vorgesehen. Die H-Brücken 206, 208 können in bekannter Weise Leistungstransistoren umfassen. Zur Ansteuerung der beiden H-Brücken 206, 208 ist ein H-Brücken-Vortreiber 210 vorgesehen. Der H-Brücken-Vortreiber 210 ist allgemein ausgebildet, Ansteuersignale von einem der beiden Prozessorsysteme 202, 204 in elektrische Treibersignale (in Form von Ansteuerspannungen) für die beiden H-Brücken 206, 208 umzuwandeln. Weitere Einzelheiten in Bezug auf die beiden H-Brücken 206, 208 und den H-Brücken-Vortreiber 210 lassen sich beispielsweise der DE 10 2014 204 287 A1 entnehmen.

Die beiden Prozessorsysteme 202, 204 sind über ein Bus-System mit dem H-Brücken-Vortreiber 210 verbunden (beispielsweise über einen sogenannten CAN-Bus). Funktional ist zwischen den beiden Prozessorsystemen 202, 204 auf der einen Seite und dem H-Brücken-Vortreiber 210 auf der anderen Seite eine Umschalteinrichtung 212 vorgesehen. Im vorliegenden Ausführungsbeispiel ist die Umschalteinrichtung 212 als Bus-Multiplexer ausgebildet, um einen Zugriff auf die EPB-Aktuatoren 13, 43 wahlweise über das erste Prozessorsystem 202 oder das zweite Prozessorsystem 204 zu ermöglichen.

Das Steuergerät ECU umfasst ferner eine als Watchdog bezeichnete Überwachungseinrichtung 214. Die Überwachungseinrichtung 214 ist ausgebildet, die Funktionsfähigkeit des ersten Prozessorsystems 202 zu überwachen und im Fehlerfall mithilfe der Umschalteinrichtung 212 eine Umschaltung auf das zweite Prozessorsystem 204 vorzunehmen. Auf diese Weise wird das möglicherweise defekte erste Prozessorsystem 202 vom H-Brücken-Vortreiber 210 entkoppelt, so dass keine möglicherweise fehlerhaften Signale des ersten Prozessorsystems 202 zu einer unbeabsichtigten Betätigung oder nicht-Betätigung eines oder mehrerer der EPB-Aktuatoren 13, 43 führen können. Konkret ermöglicht die Überwachungseinrichtung 214 eine Ansteuerung der Umschalteinrichtung 202 in Abhängigkeit der Funktionsfähigkeit des ersten Prozessorsystems 202.

Im Ausführungsbeispiel gemäß Fig. 2 ist die Überwachungseinrichtung 214 als eine mit dem ersten Prozessorsystem 202 gekoppelte und separat vom zweiten Prozessorsystem 204 vorgesehene Funktionseinheit ausgebildet. Alternativ (oder zusätzlich hierzu könnte die Überwachungseinrichtung 214 oder eine weitere solche Überwachungseinrichtung) in das zweite Prozessorsystem 204 integriert sein. In diesem Fall kann das zweite Prozessorsystem 204 eine Schnittstelle aufweisen, um zur Überwachung der Funktionsfähigkeit des ersten Prozessorsystems 202 die entsprechende Überwachungseinrichtung mit dem ersten Prozessorsystem 202 zu koppeln. Konkret kann in diesem Fall eine mangelnde Funktionsfähigkeit des ersten Prozessorsystems 202 anhand eines Ausbleibens von Kommunikation von dem ersten Prozessorsystem 202 über die Schnittstelle zum zweiten Prozessorsystem 204 erkannt werden.

Wie in Fig. 2 dargestellt, umfasst das Steuergerät ECU ferner einen Versorgungsmultiplexer 216, welcher mit den beiden Akkumulatoren BAT-1 und BAT-2 gekoppelt ist (in Fig. 2 über die entsprechende Klemme K30-1 bzw. K30-2 angedeutet). Die resultierende Redundanz bezüglich der Energieversorgung erhöht die Ausfallssicherheit des Steuergeräts ECU.

Eine mit dem Versorgungsmultiplexer 216 gekoppelte interne Versorgung 218 (mit beispielsweise einem Spannungswandler) versorgt die weiteren internen Baugruppen des Steuergeräts ECU. Dazu zählen insbesondere die beiden Prozessorsysteme 202, 204, die Umschalteinrichtung 212, die Überwachungseinrichtung 214 und den H-Brücken-Vortreiber 210.

Wie in Fig. 2 ferner dargestellt, besitzen die beiden Prozessorsysteme 202, 204 eine Schnittstelle für Radsignale (z. B. Raddrehzahlen), aus denen das jeweilige Prozessorsystem 202, 204 auf die aktuelle Fahrzeuggeschwindigkeit schließen kann. Über einen Bus-Anschluss 222 kann das Steuergerät ECU mit anderen Steuergeräten im Fahrzeug kommunizieren.

In einem von Fig. 2 abweichenden Ausführungsbeispiel können der H-Brücken-Vortreiber 210, das zweite Prozessorsystem 204, die Umschalteinrichtung 202 und die Überwachungseinheit 214 alle gemeinsam oder zumindest teilweise (z. B. ohne die Umschalteinrichtung 202 oder die Überwachungseinheit 214) zu einer integrierten Schaltung zusammengefasst sein. Diese integrierte Schaltung kann beispielsweise als separates ASIC innerhalb des Steuergeräts ECU ausgebildet sein.

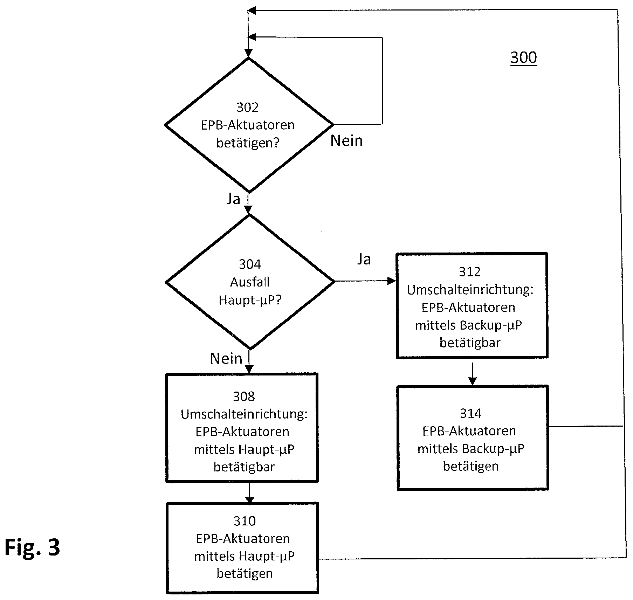

Nachfolgend wird unter Bezugnahme auf das Ablaufdiagramm 300 gemäß Fig. 3 ein Ausführungsbeispiel eines Verfahrensaspekts erläutert. Die Schritte des Ausführungsbeispiels werden von einer oder mehreren Komponenten des in Fig. 2 dargestellten Steuergeräts ECU durchgeführt.

In einem ersten Schritt 302 ermittelt das erste Prozessorsystem 202 in einer kontinuierlichen Schleife, ob die EPB-Aktuatoren 13, 43 betätigt werden sollen. Falls dies der Fall ist, beispielsweise weil ein Benutzer die Betätigungseinrichtung 80 des EPB-Teilsystems SYS-3 betätigt oder weil das Steuergerät ECU selbsttätig ein Erfordernis zum Betätigen der EPB-Aktuatoren 13, 43 erkennt, wird das Verfahren in Schritt 304 fortgesetzt. In Schritt 304 wird von der Überwachungseinrichtung 214 ermittelt, ob das erste Prozessorsystem 202 voll funktionsfähig ist. Es ist darauf hinzuweisen, dass die beiden Schritte 302 und 304 auch in anderer Weise, z. B. verschachtelt oder parallel zueinander oder in umgekehrter Reihenfolge, ablaufen können.

Wird in Schritt 304 von der Überwachungseinrichtung 214 kein Ausfall des ersten Prozessorsystems 202 erkannt, wird die Umschalteinrichtung 212 in einem weiteren Schritt 308 in einer Stellung belassen oder in eine Stellung gebracht, in welcher die EPB-Aktuatoren 13, 43 mittels des ersten Prozessorsystems 202 betätigbar, insbesondere schließbar, sind. Es ist darauf hinzuweisen, dass der Normalzustand der Umschalteinrichtung 212 derart gewählt sein kann, dass dem ersten Prozessorsystem 202 ein Zugriff auf den H-Brücken-Vortreiber 210 gestattet wird. In Schritt 310 werden dann die EPB-Aktuatoren 13, 43 mittels des ersten Prozessorsystems 202 betätigt. Anschließend wird das Verfahren in Schritt 302 fortgesetzt.

Wenn jedoch in Schritt 304 eine mangelnde Funktionsfähigkeit des ersten Prozessorsystems 202, beispielsweise dessen Ausfall, durch die Überwachungseinrichtung 214 festgestellt wird, wird das Verfahren in Schritt 312 fortgesetzt. In Schritt 312 wird die Umschalteinrichtung 212 in einem Schaltzustand belassen oder in einen Schaltzustand gebracht, in dem die EPB-Aktuatoren 13, 43 mittels des zweiten Prozessorsystems 204 betätigbar sind. Daraufhin erfolgt ein Betätigen, insbesondere ein Schließen, der EPB-Aktuatoren 13, 43 mittels des zweiten Prozessorsystems 204, bevor das Verfahren in Schritt 302 fortgesetzt wird. Alternativ oder zusätzlich hierzu kann im Anschluss an Schritt 314 auch eine Fehlermeldung erfolgen.

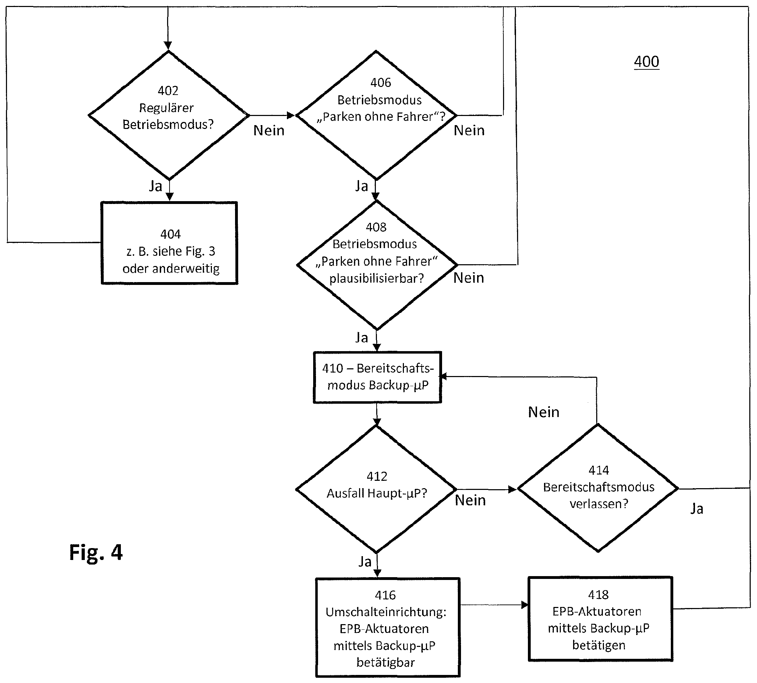

Um es dem zweiten Prozessorsystem 204 zu ermöglichen, die Notwendigkeit einer Betätigung der EPB-Aktuatoren 13, 43 in Schritt 314 zu erkennen, sind verschiedene Ausgestaltungen möglich. Beispielsweise kann das zweite Prozessorsystem 204 parallel zum ersten Prozessorsystem 202 mit der Eingabe-Einrichtung 80 gekoppelt sein. Ferner kann das zweite Prozessorsystem 204 in manchen Ausgestaltungen selbständig oder auf Hinweis der Überwachungseinrichtung 206 die mangelnde Funktionsfähigkeit des ersten Prozessorsystems 202 erkennen und in diesem Fall aus Sicherheitsgründen automatisch die EPB-Aktuatoren 13, 43 in Schritt 314 schließen. Diese Variante wird nachfolgend unter Bezugnahme auf das Ablaufdiagramm 400 gemäß Fig. 4 ausführlicher erläutert. Konkret zeigt Fig. 4 ein Ausführungsbeispiel eines weiteren Verfahrensaspekts im Zusammenhang mit einem autonomen RCP-Betriebsmodus ("Parken ohne Fahrer").

Das Verfahren gemäß Fig. 4 beginnt in Schritt 402, in dem abgefragt wird, ob der aktuelle Betriebsmodus ein regulärer Betriebsmodus ist. Der reguläre Betriebsmodus kann beispielsweise ein vom RCP-Betriebsmodus separater Betriebsmodus sein, beispielsweise ein herkömmlicher Fahrzeugbetrieb unter Anwesenheit des Fahrers.

Im Fall eines regulären Betriebsmodus verzweigt das Verfahren zu Schritt 404. In Schritt 404 kann die oben unter Bezug auf Fig. 3 erläuterte Vorgehensweise implementiert sein. Es könnte jedoch auch daran gedacht werden, in Schritt 404 eine anderweitige Vorgehensweise zu implementieren, da beispielsweise bei Anwesenheit des Fahrers im Fahrzeug kein Erfordernis für die Aktivierung des redundanten zweiten Prozessorsystems 204 bei einem Fehler des ersten Prozessorsystems 202 besteht. Vielmehr ist in diesem Fall davon auszugehen, dass der Fahrer in redundanter Weise bei Ausfall des ersten Prozessorsystems 202 noch selbst das Fahrzeug zum Stillstand bringen kann, beispielsweise über einen Push-Through-Betrieb des Teilsystems SYS-2 aus Fig. 1.

Wird in Schritt 402 erkannt, dass kein regulärer Betriebsmodus vorliegt, verzweigt das Verfahren zu Schritt 406 und überprüft, ob der RCP-Betriebsmodus gewählt ist. Sollte dies nicht der Fall sein, verzweigt das Verfahren zurück zu Schritt 402. Es ist darauf hinzuweisen, dass die Überprüfung in Schritt 406 auch in einer Endlosschleife durchgeführt werden könnte. In diesem Fall können die Schritte 402 und 404 entfallen.

Wird in Schritt 406 der RCP-Betriebsmodus erkannt, fährt das Verfahren mit einem optionalen Schritt 408 fort. Konkret wird in dem optionalen Schritt 408 das Erfassen des RCP-Betriebsmodus in Schritt 406 plausibilisiert. Eine solche Plausibilisierung kann beispielsweise dadurch erfolgen, dass das Steuergerät ECU anhand der Radsignale 220 (vgl. Fig. 2) ermittelt, ob die Geschwindigkeit unter einem vorgegebenen Geschwindigkeitsschwellenwert liegt. Oberhalb des Schwellenwerts von beispielsweise 10 km/h kann davon ausgegangen werden, dass der RCP-Betriebsmodus in Schritt 406 in fehlerhafter Weise erkannt wurde. In diesem Fall verzweigt das Verfahren von Schritt 408 zurück zu Schritt 402.

Wenn andererseits in Schritt 408 der RCP-Betriebsmodus positiv plausibilisiert werden kann, wird in einem weiteren Schritt 410 das zweite Prozessorsystem 204 in einen Bereitschaftsmodus versetzt. In diesem Bereitschaftsmodus überwacht das zweite Prozessorsystem 204 fortlaufend die Funktionsfähigkeit des ersten Prozessorsystems 202 (Schritt 412). Ferner überwacht das zweite Prozessorsystem 204 dann in Schritt 414 ebenfalls fortlaufend, ob der Bereitschaftsmodus erlassen werden soll. Ein Verlassen des Bereitschaftsmodus ist beispielsweise dann erforderlich, wenn der RCP-Betriebsmodus abgebrochen wird oder wenn die Fahrzeuggeschwindigkeit wieder über einen Schwellenwert ansteigt. Wird in Schritt 414 ein Verlassen des Bereitschaftsmodus erkannt, verzweigt das Verfahren zurück zu Schritt 402.

Das zweite Prozessorsystem 204 kann eine mangelnde Funktionsfähigkeit des ersten Prozessorsystems 202 beispielsweise daran erkennen, dass vom ersten Prozessorsystem 202 an das zweite Prozessorsystem 204 (z. B. durch Inter-Prozessor-Kommunikation) fortlaufend gelieferte Signale, beispielsweise Rad- oder Geschwindigkeitssignale, ausbleiben. Das Überprüfen der Funktionsfähigkeit des ersten Prozessorsystems 202 in Schritt 412 kann auch durch die Überwachungseinrichtung 206 erfolgen, die das Überwachungsergebnis dem zweiten Prozessorsystem 204 mitteilt. Wie bereits oben erwähnt, könnte die Überwachungseinrichtung 214 oder eine dazu parallele Überwachungseinrichtung auch im zweiten Prozessorsystem 204 integriert sein.

Sofern in Schritt 412 eine mangelnde Funktionsfähigkeit, beispielsweise ein Ausfall, des ersten Prozessorsystems 212 erkannt wird, wird in Schritt 416 die Umschalteinrichtung 206, beispielsweise gesteuert durch die Überwachungseinrichtung 206, in einem Schaltzustand belassen oder in einen Schaltzustand gebracht, in dem die EPB-Aktuatoren 13, 43 durch das zweite Prozessorsystem 204 betätigbar sind. In einem weiteren Schritt 418 werden die EPB-Aktuatoren 13, 43 daraufhin mittels des zweiten Prozessorsystems 204 betätigt, nämlich aus Sicherheitsgründen geschlossen. Damit wird das Fahrzeug sofort zum Stillstand gebracht und der RCP-Betriebsmodus demgemäß abgebrochen.

Wie sich aus den vorstehend beschriebenen Ausführungsbeispielen ergibt, lassen sich Kostenersparnisse erzielen, indem das Steuergerät ECU sowohl die EPB-Aktuatoren 13, 43 (im regulären EPB-Betrieb und unabhängig davon) als auch wenigstens eine weitere Funktionseinheit (wie beispielsweise eines oder beide der Teilsysteme SYS-1 und SYS-2) anzusteuern vermag. Aus diesem Grund kann ein separates EPB-Steuergerät entfallen. Aus Sicherheitsgründen, insbesondere für den autonomen oder den teilautonomen Fahrbetrieb, ist dem Steuergerät ECU in redundanter Weise eine Ansteuerungsmöglichkeit der EPB-Aktuatoren 13, 43 mittels des ersten und des zweiten Prozessorsystems 202, 204 möglich. Um zur weiteren Erhöhung der Sicherheit einen definierten Ansteuer-Zugriff auf die beiden EPB-Aktuatoren 13, 43 zu gestatten, legt die Umschalteinrichtung 212 fest, welchem der beiden Prozessorsysteme 202, 204 der Bus-Zugriff auf die EPB-Aktuatoren 13, 43 gestattet werden soll.

Es versteht sich, dass einzelne Aspekte der vorstehend beschriebenen Ausführungsbeispiele auch unabhängig vom dem Vorsehen einer Umschalteinrichtung 212 im Steuergerät ECU implementierbar sind. Ferner könnte auch vorgesehen sein, das Ansteuervermögen des Steuergeräts ECU auf einen einzelnen EPB-Aktuator 13 oder 43 zu beschränken, so dass zwei separate Steuergeräte ECU für die beiden in Fig. 2 dargestellten EPB-Aktuatoren 13, 43 vorgesehen werden können. In einer daraus abgeleiteten Variante können zumindest der H-Brücken-Vortreiber 210 und die beiden H-Brücken 206, 208 außerhalb der beiden Steuergeräte ECU vorgesehen und von diesen gemeinsam benutzt werden. Dies gilt in einer weiteren Variante auch für die Umschalteinrichtung 212.

## Patentansprüche

1. Kraftfahrzeug-Steuergerät (ECU), umfassend ein erstes Prozessorsystem (202), welches ausgebildet ist, wenigstens einen Aktuator (13, 43) einer elektrischen Parkbremse, EPB, und wenigstens eine weitere Kraftfahrzeug-Funktionseinheit (SYS-1; SYS-2) anzusteuern; ein zweites Prozessorsystem (204), welches ausgebildet ist, in zumindest teilweise redundanter Weise zum ersten Prozessorsystem (202) den wenigstens einen EPB-Aktuator (13, 43) anzusteuern; eine Umschalteinrichtung (212), welche ausgebildet ist, eine Betätigung des wenigstens einen EPB-Aktuators (13, 43) wahlweise über das erste Prozessorsystem (202) oder das zweite Prozessorsystem (204) zu ermöglichen, **dadurch gekennzeichnet, dass** es ferner wenigstens eine Überwachungseinrichtung (214) umfasst, welche ausgebildet ist, die Funktionsfähigkeit des ersten Prozessorsystems (202) zu überwachen und in Abhängigkeit der Funktionsfähigkeit des ersten Prozessorsystems (202) die Umschalteinrichtung (212) anzusteuern, wobei die weitere Kraftfahrzeug-Funktionseinheit (SYS-1; SYS-2) ausgebildet ist, das Kraftfahrzeug in redundanter Weise zur EPB abzubremsen oder im Stillstand zu halten, und ausgebildet ist, eine oder mehrere der folgenden Funktionen zu implementieren: eine Antiblockier-Regelung; eine Fahrdynamikregelung, wobei das zweite Prozessorsystem (204) ausgebildet ist, den wenigstens einen EPB-Aktuator (13, 43) in einem autonomen oder teilautonomen Fahrbetrieb, unmittelbar zu schließen, wenn eine mangelnde Funktionsfähigkeit des ersten Prozessorsystems (202) erkannt wird, wobei das zweite Prozessorsystem (204) eine Schnittstelle zum Empfang eines auf eine Fahrzeuggeschwindigkeit hinweisenden Signals aufweist und das Steuergerät ausgebildet ist, eine Betätigbarkeit des wenigstens einen EPB-Aktuators (13, 43) durch die zweite Prozessoreinheit (204) freizugeben, wenn anhand des auf die Fahrzeuggeschwindigkeit hinweisenden Signals darauf zu schließen ist, dass die Fahrzeuggeschwindigkeit eine vordefinierte Bedingung erfüllt.

2. Steuergerät nach einem der vorhergehenden Ansprüche, wobei die wenigstens eine Überwachungseinrichtung (214) eine mit dem ersten Prozessorsystem (202) gekoppelte und separat vom zweiten Prozessorsystem (204) vorgesehene Funktionseinheit ist.

3. Steuergerät nach einem der vorhergehenden Ansprüche, wobei die wenigstens eine Überwachungseinrichtung (214) in das zweite Prozessorsystem (204) integriert ist und das zweite Prozessorsystem (204) eine Schnittstelle aufweist, um die Überwachungseinrichtung (214) mit dem ersten Prozessorsystem (202) zu koppeln; wobei optional das zweite Prozessorsystem (204) ausgebildet ist, eine mangelnde Funktionsfähigkeit des ersten Prozessorsystems (202) anhand eines Ausbleibens von Kommunikation von dem ersten Prozessorsystem (202) über die Schnittstelle zu erkennen.

4. Steuergerät nach einem der vorhergehenden Ansprüche, ferner umfassend eine EPB-Treiberschaltung (210), welche ausgebildet ist, eine Ansteuerspannung für wenigstens eine dem wenigstens einen EPB-Aktuator (13, 43) zugeordnete H-Brücke (206, 208) zu erzeugen.

5. Steuergerät nach einem der vorhergehenden Ansprüche, wobei wenigstens die EPB-Treibereinheit (210), das zweite Prozessorsystem und die Überwachungseinheit (214) in einer integrierten Schaltung zusammengefasst sind.

6. Steuergerät nach Anspruch 4 oder 5, wobei die Umschalteinrichtung (212) ausgebildet ist, die Betätigung des wenigstens einen EPB-Aktuators (13, 43) wahlweise über das erste Prozessorsystem (202) oder das zweite Prozessorsystem (204) zu ermöglichen, indem wahlweise dem ersten Prozessorsystem (202) oder dem zweiten Prozessorsystem (204) ein Zugriff auf die EPB-Treiberschaltung (210) gestattet wird; und/oder wenigstens ein Bussystem (222) umfasst, welches ausgebildet ist, das erste Prozessorsystem (202) und das zweite Prozessorsystem (204) mit der EPB-Treiberschaltung (210) zu koppeln; und wobei die Umschalteinrichtung (212) als Bus-Multiplexer ausgebildet ist und funktional zwischen dem ersten Prozessorsystem (202) und dem zweiten Prozessorsystem (204) einerseits und der EPB-Treiberschaltung (210) auf der anderen Seite vorgesehen ist.

7. Steuergerät nach einem der vorhergehenden Ansprüche, wobei das Steuergerät ausgebildet ist, einen autonomen oder teilautonomen Fahrbetrieb zu erkennen und eine Betätigbarkeit des wenigstens einen EPB- Aktuators (13, 43) durch die zweite Prozessoreinheit (204) bei erkanntem autonomen oder teilautonomen Fahrbetrieb freizugeben; wobei optional der autonome oder teilautonome Fahrbetrieb ein autonomes oder teilautonomes Parken oder Rangieren des Fahrzeugs, insbesondere ohne Fahreranwesenheit, umfasst.

8. Steuergerät nach Anspruch 7, wobei das erste Prozessorsystem (202) dazu ausgebildet ist, dem zweiten Prozessorsystem (204) den autonomen oder teilautonomen Fahrbetrieb mittels Inter-Prozessor-Kommunikation zu signalisieren; und wobei das Steuergerät ausgebildet ist, eine Betätigbarkeit des wenigstens einen EPB-Aktuators (13, 43) durch das zweite Prozessorsystem (204) nur dann freizugeben, wenn dem zweiten Prozessorsystem (204) vom ersten Prozessorsystem (202) der autonome oder teilautonome Fahrbetrieb signalisiert wurde; und/oder wobei das zweite Prozessorsystem (204) ausgebildet ist, im autonomen oder teilautonomen Fahrbetrieb den wenigstens einen EPB-Aktuator (13, 43) bei Erkennen einer mangelnden Funktionsfähigkeit des ersten Prozessorsystems (202) unmittelbar zu schließen.

9. Verfahren zur Betätigung wenigstens eines Aktuators (13, 43) einer elektrischen Parkbremse, EPB, umfassend: wahlweises Betätigen des wenigstens einen EPB-Aktuators (13, 43) über ein erstes Prozessorsystem (202) oder ein zweites Prozessorsystem (204), wobei das erste Prozessorsystem (202) ausgebildet ist, den wenigstens einen EPB-Aktuator (13, 43) und wenigstens eine weitere Kraftfahrzeug-Funktionseinheit (SYS-1; SYS-2) anzusteuern, und wobei das zweite Prozessorsystem (204) ausgebildet ist, in zumindest teilweise redundanter Weise zum ersten Prozessorsystem (202) den wenigstens einen EPB-Aktuator (13, 43) anzusteuern, **dadurch gekennzeichnet, dass** eine Überwachungseinrichtung (214) eine Funktionsfähigkeit des ersten Prozessorsystems überwacht und der wenigstens eine EPB-Aktuator (13, 43) in Abhängigkeit von der Funktionsfähigkeit des ersten Prozessorsystems (202) von dem zweiten Prozessorsystem (204) angesteuert wird, wobei die weitere Kraftfahrzeug-Funktionseinheit (SYS-1; SYS-2) ausgebildet ist, das Kraftfahrzeug in redundanter Weise zur EPB abzubremsen oder im Stillstand zu halten, und eine oder mehrere der folgenden Funktionen implementiert: eine Antiblockier-Regelung; eine Fahrdynamikregelung, wobei das zweite Prozessorsystem (204) ausgebildet ist, den wenigstens einen EPB-Aktuator (13, 43) in einem autonomen oder teilautonomen Fahrbetrieb, unmittelbar zu schließen, wenn eine mangelnde Funktionsfähigkeit des ersten Prozessorsystems (202) erkannt wird, wobei das zweite Prozessorsystem (204) über eine Schnittstelle ein auf eine Fahrzeuggeschwindigkeit hinweisendes Signals empfängt und das Steuergerät ausgebildet ist, eine Betätigbarkeit des wenigstens einen EPB-Aktuators (13, 43) durch die zweite Prozessoreinheit (204) freizugeben, wenn anhand des auf die Fahrzeuggeschwindigkeit hinweisenden Signals darauf zu schließen ist, dass die Fahrzeuggeschwindigkeit eine vordefinierte Bedingung erfüllt.

10. Computerprogrammprodukt, umfassend Programmcode zum Durchführen des Verfahrens nach Anspruch 9, wenn der Programmcode auf einem Kraftfahrzeug-Steuergerät ausgeführt wird.

11. Steuergerät, umfassend eine oder mehrere Speichereinrichtungen, auf welchen das Computerprogrammprodukt nach Anspruch 10gespeichert ist.

## Claims

1. A motor vehicle controller (ECU), comprising a first processor system (202) that is designed to control at least one actuator (13, 43) of an electric parking brake, EPB, and at least one further motor vehicle functional unit (SYS-1; SYS-2); a second processor system (204) that is designed to control the at least one EPB actuator (13, 43) at least partially redundantly with respect to the first processor system (202); a changeover device (212) that is designed to allow actuation of the at least one EPB actuator (13, 43) selectively via the first processor system (202) or the second processor system (204), **characterized in that** it furthermore comprises at least one monitoring device (214) that is designed to monitor the functionality of the first processor system (202) and to control the changeover device (212) depending on the functionality of the first processor system (202), wherein the further motor vehicle functional unit (SYS-1; SYS-2) is designed to brake the motor vehicle or keep it stationary redundantly with respect to the EPB, and is designed to implement one or more of the following functions: an anti-lock braking control; a vehicle dynamics control, wherein the second processor system (204) is designed to close the at least one EPB actuator (13, 43) immediately in an autonomous or partially autonomous driving mode when a lack of functionality of the first processor system (202) is identified, wherein the second processor system (204) has an interface for receiving a signal that is indicative of a vehicle speed, and the controller is designed to enable the second processor unit (204) to actuate the at least one EPB actuator (13, 43) when the signal indicative of the vehicle speed is able to be used to conclude that the vehicle speed meets a predefined condition.

2. The controller according to any of the preceding claims, wherein the at least one monitoring device (214) is a functional unit coupled to the first processor system (202) and provided separately from the second processor system (204).

3. The controller according to any of the preceding claims, wherein the at least one monitoring device (214) is integrated in the second processor system (204) and the second processor system (204) has an interface in order to couple the monitoring device (214) to the first processor system (202); wherein the second processor system (204) is optionally designed to identify a lack of functionality of the first processor system (202) on the basis of the absence of communication from the first processor system (202) via the interface.

4. The controller according to any of the preceding claims, furthermore comprising an EPB driver circuit (210) that is designed to generate a control voltage for at least one H-bridge (206, 208) assigned to the at least one EPB actuator (13, 43).

5. The controller according to any of the preceding claims, wherein at least the EPB driver unit (210), the second processor system and the monitoring unit (214) are combined in an integrated circuit.

6. The controller according to claim 4 or 5, wherein the changeover device (212) is designed to allow the actuation of the at least one EPB actuator (13, 43) selectively via the first processor system (202) or the second processor system (204) by virtue of the first processor system (202) or the second processor system (204) being selectively granted access to the EPB driver circuit (210); and/or comprises at least one bus system (222) that is designed to couple the first processor system (202) and the second processor system (204) to the EPB driver circuit (210); and wherein the changeover device (212) is designed as a bus multiplexer and is provided functionally between the first processor system (202) and the second processor system (204) on one side and the EPB driver circuit (210) on the other side.

7. The controller according to any of the preceding claims, wherein the controller is designed to identify an autonomous or partially autonomous driving mode and to enable the second processor unit (204) to actuate the at least one EPB actuator (13, 43) when the autonomous or partially autonomous driving mode is identified; wherein, optionally, the autonomous or partially autonomous driving mode comprises an autonomous or partially autonomous parking or maneuvering of the vehicle, in particular without a driver being present.

8. The controller according to claim 7, wherein the first processor system (202) is designed to signal the autonomous or partially autonomous driving mode to the second processor system (204) through inter-processor communication; and wherein the controller is designed to enable the second processor system (204) to actuate the at least one EPB actuator (13, 43) only when the autonomous or partially autonomous driving mode has been signaled to the second processor system (204) by the first processor system (202); and/or wherein the second processor system (204) is designed, in the autonomous or partially autonomous driving mode, to close the at least one EPB actuator (13, 43) immediately upon identifying a lack of functionality of the first processor system (202).

9. A method for actuating at least one actuator (13, 43) of an electric parking brake, EPB, comprising: selectively actuating the at least one EPB actuator (13, 43) via a first processor system (202) or a second processor system (204), wherein the first processor system (202) is designed to control the at least one EPB actuator (13, 43) and at least one further motor vehicle functional unit (SYS-1; SYS-2), and wherein the second processor system (204) is designed to control the at least one EPB actuator (13, 43) at least partially redundantly with respect to the first processor system (202), **characterized in that** a monitoring device (214) monitors a functionality of the first processor system and the at least one EPB actuator (13, 43) is controlled by the second processor system (204) depending on the functionality of the first processor system (202), wherein the further motor vehicle functional unit (SYS-1; SYS-2) is designed to brake the motor vehicle or keep it stationary redundantly with respect to the EPB, and implements one or more of the following functions: an anti-lock braking control; a vehicle dynamics control, wherein the second processor system (204) is designed to close the at least one EPB actuator (13, 43) immediately in an autonomous or partially autonomous driving mode when a lack of functionality of the first processor system (202) is identified, wherein the second processor system (204) receives, via an interface, a signal that is indicative of a vehicle speed, and the controller is designed to enable the second processor unit (204) to actuate the at least one EPB actuator (13, 43) when the signal indicative of the vehicle speed is able to be used to conclude that the vehicle speed meets a predefined condition.

10. A computer program product, comprising program code for performing the method according to claim 9 when the program code is executed on a motor vehicle controller.

11. A controller comprising one or more storage devices having the computer program product according to claim 10 stored thereon.

## Revendications

1. Appareil de commande de véhicule automobile (ECU), comprenant un premier système de processeur (202) qui est réalisé pour piloter au moins un actionneur (13, 43) d'un frein de stationnement électrique, EPB, et au moins une autre unité fonctionnelle de véhicule automobile (SYS-1 ; SYS-2) ; un deuxième système de processeur (204) qui est réalisé pour piloter ledit au moins un actionneur d'EPB (13, 43) de manière au moins partiellement redondante par rapport au premier système de processeur (202) ; un dispositif de commutation (212) qui est réalisé pour permettre un actionnement de l'au moins un actionneur d'EPB (13, 43) au choix par l'intermédiaire du premier système de processeur (202) ou du deuxième système de processeur (204), **caractérisé en ce qu'**il comprend en outre au moins un dispositif de surveillance (214) qui est réalisé pour surveiller la capacité de fonctionnement du premier système de processeur (202) et pour piloter le dispositif de commutation (212) en fonction de la capacité de fonctionnement du premier système de processeur (202), l'autre unité fonctionnelle de véhicule automobile (SYS-1 ; SYS-2) étant réalisée pour freiner ou pour maintenir à l'arrêt le véhicule automobile de manière redondante par rapport à l'EPB, et étant réalisée pour mettre en œuvre une ou plusieurs des fonctions suivantes : une régulation d'antiblocage ; une régulation de la dynamique de conduite, le deuxième système de processeur (204) étant réalisé pour fermer directement ledit au moins un actionneur d'EPB (13, 43) dans un mode de conduite autonome ou semi-autonome si un manque de capacité de fonctionnement du premier système de processeur (202) est identifié, le deuxième système de processeur (204) présentant une interface pour recevoir un signal indiquant une vitesse de véhicule, et l'appareil de commande étant réalisé pour libérer une possibilité d'actionnement de l'au moins un actionneur d'EPB (13, 43) par la deuxième unité de processeur (204) si le signal indiquant la vitesse de véhicule permet de conclure que la vitesse de véhicule satisfait à une condition prédéfinie.

2. Appareil de commande selon l'une quelconque des revendications précédentes, dans lequel ledit au moins un dispositif de surveillance (214) est une unité fonctionnelle couplée au premier système de processeur (202) et prévue séparément du deuxième système de processeur (204).

3. Appareil de commande selon l'une quelconque des revendications précédentes, dans lequel ledit au moins un dispositif de surveillance (214) est intégré dans le deuxième système de processeur (204), et le deuxième système de processeur (204) présente une interface pour coupler le dispositif de surveillance (214) au premier système de processeur (202) ; dans lequel en option, le deuxième système de processeur (204) est réalisé pour identifier un manque de capacité de fonctionnement du premier système de processeur (202) à l'aide d'une absence de communication par l'interface en provenance du premier système de processeur (202).

4. Appareil de commande selon l'une quelconque des revendications précédentes, comprenant en outre un circuit de commande d'EPB (210) qui est réalisé pour générer une tension de pilotage pour au moins un pont en H (206, 208) associé audit au moins un actionneur d'EPB (13, 43).

5. Appareil de commande selon l'une quelconque des revendications précédentes, dans lequel au moins l'unité de commande d'EPB (210), le deuxième système de processeur et l'unité de surveillance (214) sont regroupés dans un circuit intégré.

6. Appareil de commande selon la revendication 4 ou 5, dans lequel le dispositif de commutation (212) est réalisé pour permettre l'actionnement de l'au moins un actionneur d'EPB (13, 43) au choix par l'intermédiaire du premier système de processeur (202) ou du deuxième système de processeur (204) en ce qu'un accès au circuit de commande d'EPB (210) est accordé au choix au premier système de processeur (202) ou au deuxième système de processeur (204) ; et/ou comprend au moins un système de bus (222) qui est réalisé pour coupler le premier système de processeur (202) et le deuxième système de processeur (204) au circuit de commande d'EPB (210) ; et le dispositif de commutation (212) étant réalisé comme un multiplexeur de bus et étant prévu de manière fonctionnelle entre le premier système de processeur (202) et le deuxième système de processeur (204) d'une part et le circuit de commande d'EPB (210) sur l'autre côté.

7. Appareil de commande selon l'une quelconque des revendications précédentes, dans lequel l'appareil de commande est réalisé pour identifier un mode de conduite autonome ou semi-autonome et pour libérer une possibilité d'actionnement de l'au moins un actionneur d'EPB (13, 43) par la deuxième unité de processeur (204) lorsqu'un mode de conduite autonome ou semi-autonome est identifié ; dans lequel en option le mode de conduite autonome ou semi-autonome comprend des manœuvres de stationnement ou autres autonomes ou semi-autonomes du véhicule, en particulier en l'absence de conducteur.

8. Appareil de commande selon la revendication 7, dans lequel le premier système de processeur (202) est réalisé pour signaler au deuxième système de processeur (204) le mode de conduite autonome ou semi-autonome au moyen d'une communication entre processeurs ; et l'appareil de commande étant réalisé pour ne libérer une possibilité d'actionnement de l'au moins un actionneur d'EPB (13, 43) par le deuxième système de processeur (204) que lorsque le mode de conduite autonome ou semi-autonome a été signalé au deuxième système de processeur (204) par le premier système de processeur (202) ; et/ou le deuxième système de processeur (204) étant réalisé dans le mode de conduite autonome ou semi-autonome pour fermer directement ledit au moins un actionneur d'EPB (13, 43) lorsqu'un manque de capacité de fonctionnement du premier système de processeur (202) est identifié.

9. Procédé d'actionnement d'au moins un actionneur (13, 43) d'un frein de stationnement électrique, EPB, comprenant les étapes consistant à : actionner au choix ledit au moins un actionneur d'EPB (13, 43) par l'intermédiaire d'un premier système de processeur (202) ou d'un deuxième système de processeur (204), le premier système de processeur (202) étant réalisé pour piloter ledit au moins un actionneur d'EPB (13, 43) et au moins une autre unité fonctionnelle de véhicule automobile (SYS-1 ; SYS-2), et le deuxième système de processeur (204) étant réalisé pour piloter ledit au moins un actionneur d'EPB (13, 43) de manière au moins partiellement redondante par rapport au premier système de processeur (202), **caractérisé en ce qu'**un dispositif de surveillance (214) surveille une capacité de fonctionnement du premier système de processeur, et ledit au moins un actionneur d'EPB (13, 43) est piloté par le deuxième système de processeur (204) en fonction de la capacité de fonctionnement du premier système de processeur (202), l'autre unité fonctionnelle de véhicule automobile (SYS-1 ; SYS-2) étant réalisée pour freiner ou pour maintenir à l'arrêt le véhicule automobile de manière redondante par rapport à l'EPB, et étant réalisée pour mettre en œuvre une ou plusieurs des fonctions suivantes : une régulation d'antiblocage ; une régulation de la dynamique de conduite, le deuxième système de processeur (204) étant réalisé pour fermer directement ledit au moins un actionneur d'EPB (13, 43) dans un mode de conduite autonome ou semi-autonome si un manque de capacité de fonctionnement du premier système de processeur (202) est identifié, le deuxième système de processeur (204) recevant par l'intermédiaire d'une interface un signal indiquant une vitesse de véhicule, et l'appareil de commande étant réalisé pour libérer une possibilité d'actionnement de l'au moins un actionneur d'EPB (13, 43) par la deuxième unité de processeur (204) si le signal indiquant la vitesse de véhicule permet de conclure que la vitesse de véhicule satisfait à une condition prédéfinie.

10. Produit de programme informatique, comprenant du code programme pour exécuter le procédé selon la revendication 9, lorsque le code programme est exécuté sur une unité de commande de véhicule automobile.

11. Appareil de commande, comprenant un ou plusieurs dispositifs de stockage sur lesquels le produit de programme informatique selon la revendication 10 est stocké.
